# EUROPEAN PATENT APPLICATION

(11) **EP 4 361 848 A1**
(43) Date of publication of application: **01.05.2024**
(21) Application number: 22204413.3
(22) Date of filing: 28.10.2022
(51) Int. Cl.: G06F 16/901, G06F 16/9032

(54) **DYNAMIC QUESTION AND ANSWER FRAMEWORK**

(71) Applicant: Celonis SE, 80333 München (DE)
(72) Inventor: Lata, Teodora, 80333 München (DE); Kathe, Moritz, 80333 München (DE); Pfister, David, 80333 München (DE); Oppenheim, Brian, New York, 10007 (US)
(74) Representative: 2s-ip Schramm Schneider Bertagnoll Patent- und Rechtsanwälte Part mbB

(57) **Abstract**

The present invention relates to a computer-implemented method enabling a coding-free analysis of process data. Accordingly, a dynamic question and answer framework is provided according to which a user may select specific process mining questions and automatically receive related answers based on the attached data model. The answers are generated by querying the data model using query statements that are associated to the selected process mining question.

## Description

### Field of the invention

The present invention relates to a computer-implemented method to enable a coding-free analysis of recorded process data.

### Background of the invention

Today, companies execute a vast amount of processes in which a tremendous amount of data is generated and collected. The goal often is data-driven decision making which involves leveraging knowledge and value from the recorded process data. Usually, the relevant knowledge is extracted using process mining tools. In doing so, companies may discover relevant insights about its processes.

Traditional process mining tools, however, although being designed and intended for a wide range of users, require technical skills to prepare and analyze the process data. Hence, typically only data engineers and data analysts having the relevant technical skills which brings them into the position of conducting meaningful analysis of the process data. The users having the most relevant business knowledge about the executed processes, instead, are often not prepared to use such tools. As a result, organizations may suffer a slow adoption rates of data-driven decision making.

Clearly, adopting a traditional process mining tool requires effort and often technical skills, whereas business departments need to run the daily operations leaving no time to invest in training themselves on such a tool by learning the technical skills of a data analyst.

Accordingly, the time needed to make a decision based upon the analysis generated by a process mining tool is long since those who are in the position to make the decision may not get relevant analysis results quick enough. As a consequence, the value to be derived from using a process mining tool is reduced.

### Object of the invention

It is therefore an object of the present invention to provide a method which reduces the complexity and cognitive challenge to conduct process mining analysis on large-scale process data.

### Solution according to the invention

This object is solved by the computer-implemented method of the independent claim. Further advantageous embodiments are provided in the dependent claims.

Provided is a computer-implemented method to enable a coding-free analysis of recorded process data. The method comprises displaying, by way of a user interface, at least one verbal approach of the analysis of recorded process data. The at least one verbal approach is represented by at least one execution command being stored in a storage device. Each of the at least one execution command is assigned to a predefined data structure.

The method further comprises generating, upon selection of a specific verbal approach, an analysis result by executing the corresponding execution command on the recorded process data and displaying, by way of the user interface, a visualization of the analysis result.

The method further comprises determining, upon selection of the specific verbal approach, a predefined number of follow-up verbal approaches. Each follow-up verbal approach is represented by a further execution command being stored in the storage device, wherein each further execution command is assigned to the predefined data structure.

The method also comprises displaying, by way of the user interface, the determined follow-up verbal approaches.

The recorded process data is a complex multidimensional data set comprising information on the executed process instances. The information on the executed process instances may be gathered automatically, e.g., by using process sensors in a manufacturing line or along business processes.

The method according to the invention has the advantage that a user is enabled to analyze the recorded process data in a very intuitive way by using a verbal approach. The verbal approach may be any command or question formulated in natural language and addresses searches in the recorded process data. The latter is achieved by representing the at least one verbal approach by at least one execution command being stored in the storage device.

A user of the computer-implemented method therefore may select a specific verbal approach which triggers an execution of the corresponding execution command on the recorded process data thereby generating an analysis result. Hence, the analysis result is achieved without the user needing to know how to code the execution command. Instead, the user may focus on marking and/or selecting an appropriate verbal approach for the search she had in mind.

A further advantage of the computer-implemented method as claimed is that the user is recommended follow-up verbal approaches. By selecting a follow-up verbal approach the user may literally "drill down" through the recorded process data without the need of any coding skills. As a result, the cognitive challenge of analyzing or mining process data is dramatically reduced. Untrained users of the method according to the invention may immediately receive custom analysis results, e.g. key performance indicators (KPIs) particularly relevant to them, in order to understand their processes and to support their decision-making in a self-serviceable way.

Preferably, the verbal approach of the analysis of recorded process data is a question that is answered by an executer querying the recorded process data using the corresponding execution command.

Formulating the verbal approach as a question introduces an intuitive approach to the analysis of recorded process data to the user, in particular the business user. Each question encodes a problem statement for which a solution may be found in the process data. In particular, the question may be an open question aiming at receiving an overview of processes or the question may be specific in that it queries individual KPIs.

The execution command is adapted to the format in which the recorded process data is stored. This has the advantage that marking and/or selecting a specific question may directly triggers the executer to execute the corresponding execution command without the need of any further transformation.

Preferably, each of the follow-up verbal approaches is a follow-up question that is answered by the executer querying the recorded process data using the corresponding further execution command.

In one embodiment, the execution command is a query statement and the further execution command is a further query statement.

Preferably, the analysis result is a query result that represents an answer to the specific verbal approach and/or one of the follow-up verbal approaches.

The user interface may be a web-based interface that can be displayed in and manipulated using any standard web browser. This further reduces the barrier to adaptation since the user need not install software which is specific for mining the recorded process data.

The analysis result may be embedded into the representation of the verbal approach, in particular the question, in the user interface. This representation of the analysis result is particularly useful in case the question relates to a specific KPI.

Preferably, the analysis result is visualized on a graphical interface of the user interface, in particular a dashboard. The graphical interface may be composed of various boxes or snippets in which different aspects of the analysis result are visualized. This representation has the advantage that the user receives a comprehensive and an essentially complete answer to the question at a glance. The answer therefore offers various threads to pick up for subsequent detailed explorations of the processes.

In one embodiment, the follow-up verbal approaches are recommended by way of a predefined set of rules.

Recommending questions following up an analysis result enables navigating through a thorough analysis of the process data at the tip of a finger without the need to write any code. Ideally, the follow-up questions are recommended on basis of a knowledge base which identifies insights to look for in the recorded process data. A seamless recommendation of follow-up questions enables the user to experience an uninterrupted stream of process exploration which enhances the chance to receive most-relevant analysis results and insights.

Preferably, the predefined data structure is a hierarchical data structure, in particular a tree structure, wherein the execution command is assigned to a root node of the hierarchical data structure and each further execution command is assigned to a child node of the hierarchical data structure.

The hierarchical data structure has the advantage that it encodes a nested drill-down path which resembles typical data analysis strategies. Depending on the starting point of an analysis, further insights into the process data may be required and each further insight may generate the desire to even dig further into the process data in order to isolate a measure of interest, e.g. a process instance or even individual process steps.

The nested drill-down path is realized by assigning the execution command corresponding to the verbal approach to the root node, the respective further execution commands to child nodes linked to the root node and child nodes linked to each child node and so on. For each specific verbal approach a separate hierarchical data structure may be populated.

Preferably, the verbal approach and the follow-up verbal approaches are organized in a hierarchy corresponding to the hierarchical data structure, or the verbal approach and the follow-up verbal approaches are directly stored in the hierarchical data structure.

Preferably, the method further comprises receiving, by way of the user interface, at least one input based on which the analysis result is filtered.

Filtering the analysis result provides the user a way to interact with the analysis result in order to refine the analysis result and/or explore underlying reasons for the analysis result.

Preferably, the method further comprises receiving, by way of the user interface, at least one parameter which adapts an interpretation of the recorded process data.

The interpretation of the recorded process data relates to the interpretation of process steps or events within the process data. The classification of events may be controlled by at least one parameter. Hence, changing and/or tweaking the at least one parameter by a user by way of the user interface may directly affect the interpretation of the recorded process data, in particular the classification of events in the process data, which may lead to a different analysis result.

In one embodiment, the root node and each child node comprise an attribute, in which a Boolean representing the analysis status is stored, therein the Boolean is set to false by default and for each generated analysis result the corresponding Boolean is set to true.

The attribute storing the analysis status enables to keep track of already answered questions and indicates which questions are yet to be answered.

Preferably, the selected verbal approach corresponds to a current node and the set of predefined rules prioritizes child nodes and of the current node to which the Boolean in the corresponding attribute is set to false over sibling nodes and parent nodes of the current node.

In other words, the follow-up questions are determined according to an ordered list, which reads:
1. Unselected verbal approaches that are children of the current verbal approach;
2. Unselected verbal approaches that are at the same hierarchy level as the current verbal approach and under the same parent, i.e. siblings;
3. Unselected verbal approaches that are higher in the hierarchy then the current question but under the same parent, prioritized with lower levels first, i.e. uncles, great aunts, etc;
4. Unselected verbal approaches that are direct children of previously selected verbal approaches, prioritized with questions higher in the hierarchy first.

In one embodiment, the method further comprises displaying additional questions related to the recorded process data that cannot yet been answered by querying the recorded process data.

Preferably, the execution command and the further execution command are executed in a data model built from the recorded process data, wherein the data model comprises an amount of data which is continuously increased by a stream of process data.

The selection of a verbal approach therefore directly triggers the executer to execute the execution command in the data model. With the data model hosting an ever increasing amount of data, the selected verbal approach may generate different analysis results for executions at different points in time.

Preferably, the execution of the further execution command, which is assigned to a child node, in the data model is based on the query result of the execution command which is assigned to its direct parent node. This feature comes with two additional advantages: First, the follow-up query result is always consistent with the previous, hierarchically superior query result, independent of the time passed between executing the execution command assigned to the parent node and the further execution command assigned to the child node of the parent node. Second, the search space for the follow-up execution command is reduced since the full data model may be reduced to only those records that are related to the previous, hierarchically superior query result.

Preferably, the method further comprises submitting, by way of the user interface, a new verbal approach, wherein for the new verbal approach a new execution command is generated.

The generation of a new execution command may be automated, in particular for a standard KPI. A new verbal approach may be submitted at each level of the hierarchy/hierarchical data structure.

Preferably, the method further comprises generating, upon selection of a specific follow-up verbal approach, a follow-up analysis result by executing the corresponding execution command on the recorded process data; and displaying the follow have up analysis result appended to the analysis result using a long-scrolling graphical interface of the user interface.

Appending a follow-up analysis result to the analysis result has the advantage that the user can create a question and answer thread which is specific to insights that are sought for. Further, the analysis result does not vanish once the follow-up verbal approach is selected, but is seamlessly extended towards a more specific direction of analysis through the multidimensional process data set.

### Short description of the figures

Some embodiments and aspects of the invention are explained below in combination with the figures, which show:
- Fig. 1: a schematic overview of an exemplary computer system to carry out an embodiment of the method according to the invention;
- Fig. 2: an example for recommending follow-up verbal approaches according to an aspect of the invention;
- Fig. 3: an embodiment of an exemplary analysis result;
- Fig. 4: an embodiment of a long-scrolling graphical interface hosting an exemplary sequence of analysis results; and
- Fig. 5: an overview over an embodiment of the computer-implemented method according to an aspect of the invention.

### Detailed description of the invention

The computer-implemented method according to the invention enables a coding-free analysis of recorded process data. The process data usually is recorded in at least one external computer system during the execution of processes. A process comprises a number of process steps and the execution of process steps of a process generates a process instance.

In general, the process data is a very large, multidimensional dataset having a rather small universe size in relation to its cardinality. The universe size defines the number of unique tokens in the dataset and the cardinality the total amount of tokens. A token in the process data may represent a transition between two process steps in a process instance.

The method according to the invention relies on an interface to access the recorded process data either directly as raw data in the at least one external computer system or an interface to a data model to which the process data is loaded, cleaned, and transformed, e.g. to a process protocol. The process protocol comprises at least a case (or process instance) identifier, related process steps and their order in the process instance.

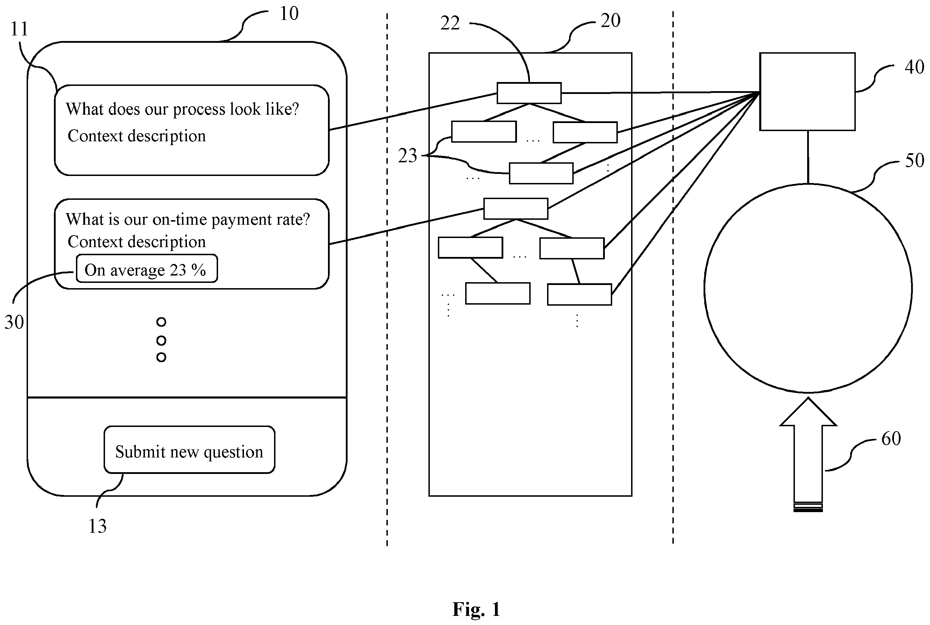

**Fig. 1** shows a schematic overview of an exemplary computer system to carry out an embodiment of the method according to the invention.

The schematic overview of Fig. 1 is structured into three sections. The section on the left represents an exemplary user interface 10 according to an aspect of the invention. The user interface 10 may be accessed by the user on a remote device.

The middle section illustrates the storage device 20 according to the invention in which the execution commands 25; 26; 27 are stored. The storage device may either be comprised in the remote device of the user or located in a cloud-computing infrastructure to which the remote device of the user may be connected over a network connection.

The section on the right focuses on the data model 50 in which the executor 40 executes the execution commands 25; 26; 27 and which continuously incorporates or ingests a stream 60 of process data. The data model 50 is stored in a storage device, in particular main memory, e.g. in a cloud-computing infrastructure. Thus, the execution commands 25; 26; 27 and the data model 50 may be stored in the same storage device.

The user interface 10 displays at least one verbal approach 11 of the analysis of recorded process data. A verbal approach 11 may be understood as a problem definition, wherein the problem may be solved by an analysis of the process data. Typically, the problem definition for a data analysis is formulated as a question, wherein the expected answer to the question solves the problem. Other forms of problem definitions and therefore verbal approaches 11 are similarly possible.

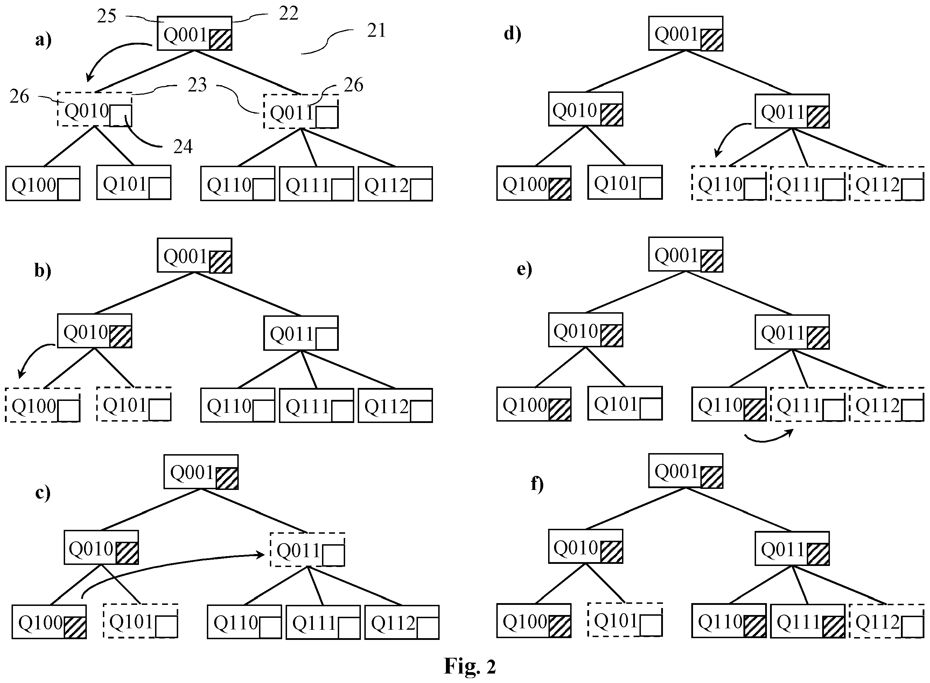

In the example of Fig. 1 the first verbal approach 11 is defined as "What does our process look like?" which may be classified as an overview problem. In other words, the first verbal approach 11 aims at receiving an overview over the executed process instances by analyzing the recorded process data. The second verbal approach 11 of Fig. 2 is defined as "What is our on-time payment rate?" which may be classified as a KPI problem. The second verbal approach 11 aims at receiving a specific number indicating the on-time payment rate.

Both verbal approaches 11 of Fig. 1 may be enriched by a context description. The context description may provide further information relating to the verbal approach 11. For instance, the context description for the first verbal approach 11 may read "gain a comprehensive overview of the process". The context description for the second verbal approach 11 may read "paying invoices on time will keep our supplier relations healthy, while improving our working capital".

The at least one verbal approach 11 is represented by at least one execution command 25 being stored in the storage device 20. In one embodiment, the at least one verbal approach 11 is linked to at least one execution command 25. Preferably, each verbal approach 11 is represented by or linked to one or more execution commands 25.

Each execution command 25 is assigned to a predefined data structure 21. The predefined data structure 21 is explained in more detail with respect to Fig. 2. In the embodiment shown in Fig. 1 the predefined data structure 21 is sketched as a hierarchical data structure comprising a root node 22 and several child nodes 23. The execution commands 25 corresponding to the verbal approaches 11 of the user interface 10 are assigned to the root node 22 of the respective predefined data structure 21.

Upon selection of a specific verbal approach 15, which is one of the at least one verbal approach 11, the executor 40 is triggered to execute the corresponding execution command 25 on the recorded process data. In this example, the executor 40 is adapted to execute the execution commands 25 directly in a data model 50 of the process data.

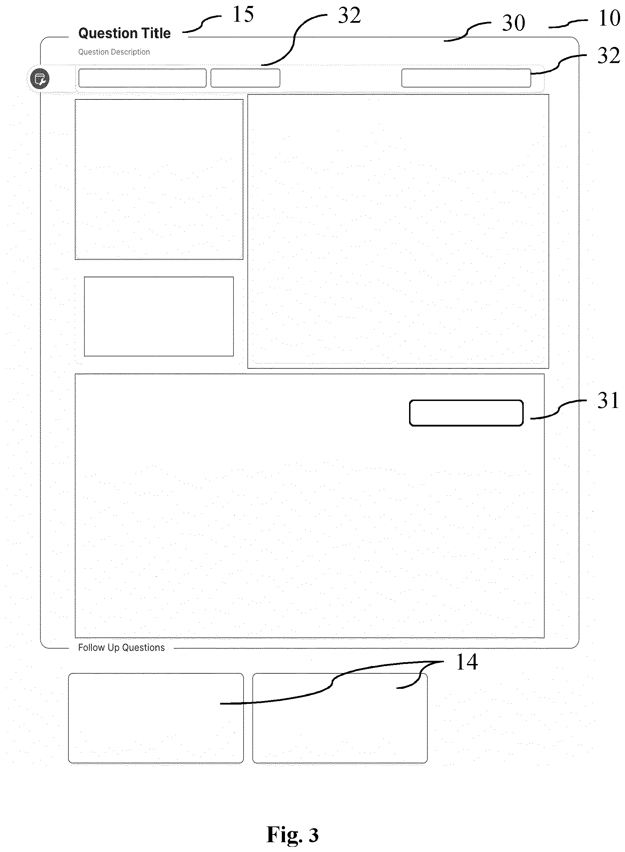

Executing the execution command 25 corresponding to the specific verbal approach 15 generates an analysis result 30. The analysis result 30 may be displayed in a visualization on the user interface 10. For example, the analysis result 30 relating to a KPI may be displayed embedded with the specific verbal approach 15. Preferably, the analysis result 30 is visualized in a graphical interface of the user interface 10, of which an example is discussed with respect to Fig. 3.

The user interface 10 of Fig.1 further comprises an input for the user to submit a new verbal approach 13. Upon submission of the new verbal approach 13, a new execution command 27 and a new instance of the predefined data structure are generated. The new execution command 27 is assigned to the root node 22 of the new instance of the predefined data structure 21.

The three dots sketched in the user interface 10 of Fig. 1 indicate that the user interface 10 usually comprises more than two verbal approaches 11. In a preferred embodiment, the user may select between six initial verbal approaches 11, wherein each initial verbal approach 11 triggers an in-depth analysis on different aspects of the recorded process data.

According to an aspect of the invention (not shown) the method comprises displaying additional questions related to the recorded process data which cannot yet been answered by querying the recorded process data. These additional questions may be displayed grayed-out and not selectable for the user. Reasons for why an additional question cannot yet been answered may include a lack of respective attributes or tokens in the recorded process data and/or a lack of the corresponding execution command.

Upon selection of the specific verbal approach 15, a predefined number of follow-up verbal approaches 14 is determined. Each follow-up verbal approach 14 is represented by a further execution command 26 being stored in the storage device 20. Each further execution command 26 is assigned to the predefined data structure 21, in particular to a child node 23 of the root node 22 which represents the specific verbal approach 50. The determination of follow-up verbal approaches 14 is based on a recommendation algorithm which is explained in more detail with respect to Fig. 2.

**Fig. 2** shows an example for recommending follow-up verbal approaches according to an aspect of the invention.

The six panels a) to f) of Fig. 2 repeat the same predefined data structure 21 for different stations of an analysis of recorded process data. The data structure 21 is a hierarchical structure and comprises the root node "Q001", a first child node "Q010" and a second child node "Q011". The first child node itself has two children, "Q100" and "Q101". The second node has three children, "Q110", "Q111" and "Q112".

In the embodiment of Fig. 2 the root node 22 and each child node 23 comprise an attribute 24, in which a Boolean representing the analysis status is stored. In Fig. 2, the attribute is represented by the square in the bottom right corner of each rectangle representing a node of the hierarchical structure. A shaded square represents the Boolean state "true" that indicates the existence of an analysis result 30 for the corresponding specific verbal approach 15. The open squares represent the Boolean state "false", indicating that the corresponding verbal approach 25; 26 has not yet been selected.

In one embodiment, each instance of the hierarchical structure 21 stores a specific verbal approach 15 and its respective follow-up verbal approaches 14. The execution command 25 corresponding to the specific verbal approach 15 is assigned to the root node "Q001" and the further execution commands 26 are assigned to child nodes corresponding to the follow-up verbal approaches 14.

In the embodiment of Fig. 2, the execution commands 25; 26 are stored in the hierarchical structure 21. The execution command 25 may be a query statement and the further execution command 26 may be a further query statement. The queries are adapted to the data model 50, in particular using the Celonis Process Query Language (PQL).

For each specific verbal approach 15 a predefined number of follow-up verbal approaches 14 is determined on basis of a recommendation algorithm. The recommendation algorithm comprises a predefined set of rules according to which child nodes of the specific verbal approach 15 that store the Boolean state "false" in their attribute 24 have the highest priority. The second highest priority is assigned to child nodes at the same level of the specific verbal approach 15, i.e. sibling notes, which store the Boolean state "false" in their attribute 24. The third highest priority is assigned to child nodes at higher levels than the specific verbal approach 15 under the same parent node, prioritized with lower-level first, i.e. uncles, great aunts, etc., which store the Boolean state "false" in their attribute 24. The lowest priority is assigned to direct child nodes of a previously specific verbal approach 15, prioritized with their level in the hierarchical structure, i.e. higher levels first.

The nodes in Fig. 2 represented by a dashed rectangle are displayed as follow-up verbal approaches 14 in the user interface 10 upon selection of the corresponding specific verbal approach 15.

In panel a), node "Q001" is selected and its children "Q010" and "Q011" are displayed to represent the follow-up verbal approaches 14 as determined by the recommendation algorithm.

In panel b), node "Q010" is selected for which a follow-up analysis result 33 is generated. Accordingly, its child nodes "Q100" and "Q101" are displayed as follow-up verbal approaches 14, since they have the highest priority.

In panel c), node "Q100" is selected, for which a follow-up analysis result 33 is generated. Accordingly, the child node "Q101" being a sibling of the selected child node "Q100" has the second highest priority and the child node "Q011" being an aunt of the selected child node "Q100" has the third highest priority. Since the remaining child nodes have lower priority than the sibling and the aunt, the latter two are determined as the corresponding follow-up verbal approaches 14.

In panel d), node "Q011" is selected, for which a follow-up analysis result 33 is generated. The child node "Q011" has three children which all have the highest priority according to the recommendation algorithm. In this example, all three children are determined as follow-up verbal approaches 14. In case the predefined number of follow-up verbal approaches 14 is strictly limited to two, only two follow-up verbal approaches are selected even if there are more than two child nodes with equal priority to choose from.

In panel e), node "Q110" is selected, for which a follow-up analysis result 33 is generated. The remaining two siblings of the child node "Q110" have second highest priority and are both determined as follow-up verbal approaches 14.

In panel f), note "Q111" is selected, for which a follow-up analysis result 33 is generated. The remaining sibling of the child node "Q111" has second highest priority and its cousin "Q101" has lowest priority. Since these two child nodes are the only child nodes remaining in the example of Fig. 2, both are determined as follow-up verbal approaches 14 and displayed to the user on the user interface 10.

**Fig. 3** shows an embodiment of an exemplary analysis result.

The example of Fig. 3 is a visualization of the analysis result 30 generated for a specific verbal approach 15 from the user interface 10 shown in Fig. 1. The specific verbal approach 15 is embodied by the question "What is our on-time payment rate?". The generated analysis result is visualized on a graphical interface of the user interface, wherein the graphical interface may be composed of further multiple graphical interfaces. The visualizations shown in each graphical interface are adapted to the context of the specific verbal approach 15 and optimized with respect to their storytelling capabilities. For instance, a KPI is typically represented by a number, wherein its history may be represented by way of an interactive bar chart or other histogram charting techniques.

The visualization of the analysis result 30 may further comprise a graphical interface visualizing a data table with filtering capabilities 31. In one embodiment, filtering the data table also affects the visualizations in other graphical interfaces of the analysis result 30. In other words, the visualizations in the graphical interfaces of the user interface may be linked to one another. In some embodiments, the visualization of the analysis result 30 may be an interactive dashboard that is updated in real time, i.e., without noticeable delay.

At least one graphical interface of the user interface 10 visualizing the analysis result 30 may further comprise an input of at least one parameter 32 which adapts an interpretation of the recorded process data. An example for a parameter the user can input to the analysis result 30 is the grace period. The grace period parameter allows users to enlarge the period around an invoice due date which is still considered on time. This parameter thus changes the interpretation of the recorded process data. A further example for an input parameter on the analysis result 30 is given by a switch between invoice volume and invoice value on the top right corner of the user interface 10 in Fig. 3.

In one embodiment, setting the at least one parameter 32 triggers the executor to execute a modified execution command on the recorded process data. Setting the at least one parameter 32 may also just transform the analysis result 30 without having to execute a further query on the recorded process data.

In one embodiment, the visualization of the analysis result 30 only comprises the analysis result 30 as obtained from executing the corresponding execution command. In another embodiment, the visualization of the analysis result 30 is constantly updated by repeated executions of the corresponding execution command in the background to provide a real-time adjusted analysis result.

Preferably, the query result is cached, i.e., stored temporarily in main memory. Hence, subsequent executions of the execution command in the background may be performed as delta updates. In other words, for each recurrent execution of the execution command is only run the part of the data model that has been ingested since the time at which the last execution was triggered. As a result, the search space for each recurrent execution of the execution command is strongly reduced with respect to the size of the entire data model, such that the delta updates may be performed essentially at real-time, i.e., without any noticeable delay.

Preferably, the at least one graphical interface visualizing the analysis result 30 is directly addressable in a web browser such that it can be effortlessly shared between users.

In the embodiment of Fig. 3 the determined follow-up verbal approaches 14 are displayed below the analysis result 30 at the bottom of the page. The user may select a follow-up verbal approach 14 by clicking on the respective button of the user interface 10.

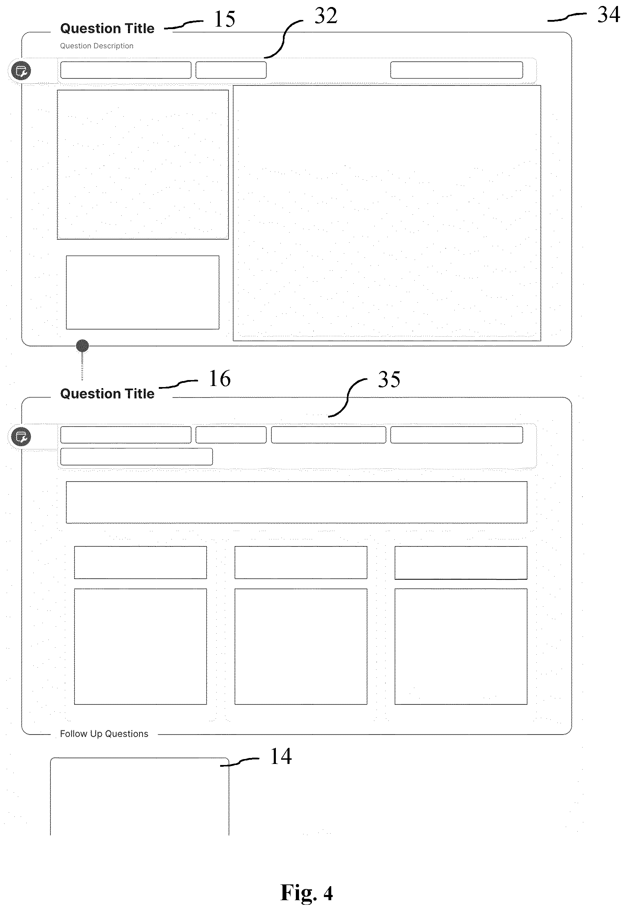

**Fig. 4** shows an example of a long-scrolling graphical interface visualizing a sequence of analysis results.

The top part of Fig. 4 corresponds to the visualization of the analysis result 30 of Fig. 3. The bottom part of Fig. 4 visualizes a follow-up analysis result 33 that was generated upon selection of a specific follow-up verbal approach 16 by executing the corresponding further execution command 26 on the recorded process data. In this example, the specific follow-up verbal approach 16 is defined by the question "What is the breakdown of payments in early, late and on-time?".

According to an aspect of the invention, the follow-up analysis result 33 is displayed by appending to the analysis result 30 on a long-scrolling graphical interface 34, in particular webpage, of the user interface 10. Thus, the user may experience a seamless drill-down extension of the analysis result 30 into a dimension defined by the specific follow-up verbal approach 16.

In one embodiment, the analysis result 30 and the follow-up analysis result 33 are components of a common interactive dashboard. Any further follow-up analysis result 33 is a further component of the dashboard. Preferably, filtering the analysis result 30, in particular the data table of the analysis result 30, also affects the follow-up analysis result 33.

In one embodiment, the at least one parameter 32 set for the analysis result 30 is further applied to the follow-up analysis result 33. It may be also advantageous to input at least one further parameter 35 to the follow-up analysis result 33 which is specific to the corresponding follow-up verbal approach and therefore has no effect on the analysis result 30.

Further follow-up verbal approaches 14 are determined for the specific follow-up verbal approach 16. In the embodiment of Fig. 4, one further follow-up verbal approaches is displayed below the visualization of the follow-up analysis result 33 at the bottom of the long-scrolling webpage 34.

Upon selection of a further follow-up verbal approach 14, the long-scrolling webpage 34 is extended by directly appending a further follow-up analysis result generated for the further follow-up verbal approach. In this way, an interactive data story on the recorded process data is generated without requiring any coding skills. The data story may enable the user to make data-driven decisions.

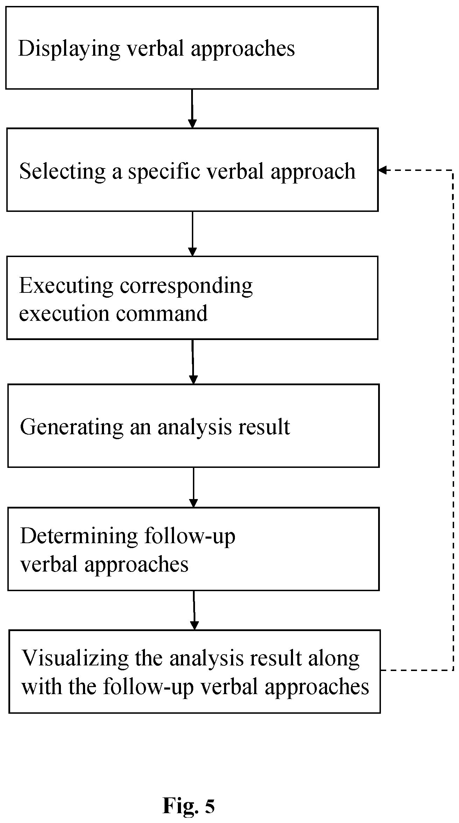

**Fig. 5** summarizes an overview over the method steps of an embodiment of the computer-implemented method according to the invention.

According to an aspect of the invention the method initializes by displaying verbal approaches 11 to the user on a user interface 10. In one embodiment, there are six verbal approaches 11 displayed to the user.

With selecting a specific verbal approach 15 an analysis is triggered.

The analysis is triggered by executing the execution command 25 which corresponds to this specific verbal approach 15. The execution command 25 is executed by the executor 40 on the recorded process data, in particular on a data model 50 from the recorded process data.

On basis of the executed execution command 25 the analysis result 30 is generated.

Essentially in parallel, a predefined number of follow-up verbal approaches 14 is determined.

The analysis result 30 and the determined follow-up verbal approaches 14 are visualized on at least one graphical interface of the user interface 10 for further exploration by the user and ongoing analysis of the process data. The dashed-line arrow indicates a loop that enables the user to drill down on the recorded process data in a coding-free manner.

### Reference numerals:

- 10: user interface
- 11: at least one verbal approach
- 12: direct KPI result
- 13: new verbal approach
- 14: predetermined number of follow-up verbal approaches
- 15: specific verbal approach
- 16: specific follow-up verbal approach

- 20: storage device
- 21: predetermined data structure
- 22: root node of the hierarchical data structure
- 23: child node of the hierarchical data structure
- 24: Boolean attribute
- 25: at least one execution command
- 26: further execution command
- 27: new execution command

- 30: analysis result
- 31: at least one input for filtering the analysis result
- 32: at least one parameter
- 33: follow-up analysis result
- 34: long-scrolling webpage representing the follow-up analysis result appended to the analysis result
- 35: at least one further parameter

- 40: executer
- 50: data model
- 60: stream of process data

## Claims

1. Computer-implemented method to enable a coding-free analysis of recorded process data, the method comprising:
- displaying, by way of a user interface (10), at least one verbal approach (11) of the analysis of recorded process data, wherein the at least one verbal approach (11) is represented by at least one execution command (25) being stored in a storage device (20), wherein each of the at least one execution command (25) is assigned to a predefined data structure (21),
- generating, upon selection of a specific verbal approach (15), an analysis result (30) by executing the corresponding execution command (25) on the recorded process data,
- displaying, by way of the user interface (10), a visualization of the analysis result (30),
- determining, upon selection of the specific verbal approach (15), a predefined number of follow-up verbal approaches (14), wherein each follow-up verbal approach (14) is represented by a further execution command (26) being stored in the storage device (20), wherein each further execution command (26) is assigned to the predefined data structure (21), and
- displaying, by way of the user interface (10), the determined follow-up verbal approaches (14).

2. The method of claim 1, wherein the at least one verbal approach (11) of the analysis of recorded process data is a question that is answered by an executer (40) querying the recorded process data using the corresponding execution command (25).

3. The method of claim 1, wherein each of the follow-up verbal approaches (14) is a follow-up question that is answered by the executer (40) querying the recorded process data using the corresponding further execution command (26).

4. The method of claim 1, wherein the execution command (25) is a query statement and the further execution command (26) is a further query statement.

5. The method of claim 1, wherein the analysis result (30) is a query result that represents an answer to the specific verbal approach (15) and/or one of the follow-up verbal approaches (14).

6. The method of claim 1, wherein the follow-up verbal approaches (14) are recommended by way of a predefined set of rules.

7. The method of claim 1, wherein the predefined data structure (21) is a hierarchical data structure, in particular a tree structure, wherein the execution command (25) is assigned to a root node (22) of the hierarchical data structure and each further execution command (26) is assigned to a child node (23) of the hierarchical structure.

8. The method of claim 1, further comprising receiving, by way of the user interface, at least one input (31) based on which the analysis result is filtered.

9. The method of claim 1, further comprising receiving, by way of the user interface, at least one parameter (32) which adapts an interpretation of the recorded process data.

10. The method of claim 7, wherein the root node (22) and each child node (23) comprise an attribute (24), in which a Boolean representing the analysis status is stored, wherein the Boolean is set to false by default and for each generated analysis result (30) the corresponding Boolean is set to true.

11. The method of claim 10, wherein the specific verbal approach (15) corresponds to a current node and the predefined set of rules prioritizes child nodes of the current node to which the Boolean in the corresponding attribute is set to false over sibling nodes and parent nodes of the current node.

12. The method of claim 2, wherein the method comprises displaying additional questions related to the recorded process data that cannot yet been answered by querying the recorded process data.

13. The method of claim 1, wherein the execution command (25) and the further execution command (26) are executed in a data model (50) built from the recorded process data, wherein the data model (50) comprises an amount of data which is continuously increased by a stream (60) of process data.

14. The method of claim 1, further comprising submitting, by way of the user interface (10), a new verbal approach (13), wherein for the new verbal approach (13) a new execution command (27) is generated.

15. The method of claim 1, further comprising
- generating, upon selection of a specific follow-up verbal approach (16), a follow-up analysis result (33) by executing the corresponding execution command (26) on the recorded process data, and
- displaying the follow-up analysis result (33) appended to the analysis result (30) using a long-scrolling graphical interface (34) of the user interface (10).
